# FASCICULE DE BREVET EUROPEEN

(11) **EP 1 170 439 B1**
(45) Date de publication et mention de la délivrance du brevet: **12.09.2007**
(21) Numéro de dépôt: 01460043.1
(22) Date de dépôt: 03.07.2001
(51) Int. Cl.: E04F 15/04, E04F 15/022

(54) **Elément de parquet à joints compensateurs, et procédé de fabrication de cet élément**
Parkettelement mit ausgleichenden Fugen und Verfahren zur Herstellung
Parquet element with compensating joints , and process for the manufacture of such element

(30) Priorité: 05.07.2000 FR 0008729
(43) Date de publication de la demande: 09.01.2002
(73) Titulaire: Tarkett SAS, 92748 Nanterre Cédex (FR)
(72) Inventeur: Geraud, Pierre, 35100 Rennes (FR)
(74) Mandataire: Le Faou, Daniel

(56) Documents cités:
- EP-A- 0 236 283
- WO-A-80/01089
- WO-A-84/03321
- CH-A- 255 650
- FR-A- 1 117 506
- US-A- 3 365 850
- US-A- 3 908 053

## Description

La présente invention concerne un élément de parquet comprenant une latte de base revêtue d'un parement en bois.

Elle concerne également un procédé de fabrication de cet élément.

Ce type d'élément de parquet est bien connu (voir par exemple le document EP-A-0 236 283).

Les objectifs de l'invention sont de proposer un élément de parquet qui soit à la fois peu coûteux, très résistant, même s'il est soumis à un usage intensif et à des efforts importants - comme c'est le cas pour un sol sportif et polyvalent par exemple - qui soit pratiquement insensible aux conditions climatiques, en particulier à la variation hygrométrique du milieu ambiant, et qui présente également un aspect décoratif, ainsi qu'une grande simplicité de réparation en cas de nécessité.

Plus précisément, l'invention se rapporte à un élément de parquet dont le parement est composé d'un ensemble de plaquettes rectangulaires ou carrées juxtaposées, collées sur la face supérieure de la latte, lesdites plaquettes étant adjacentes à la fois suivant la direction longitudinale et suivant la direction transversale de la latte, mais étant séparées les unes des autres, dans au moins l'une de ces directions, par une membrane mince en matière élastomère susceptible d'absorber les variations dimensionnelles du parement.

Ces membranes constituent un ensemble de joints compensateurs.

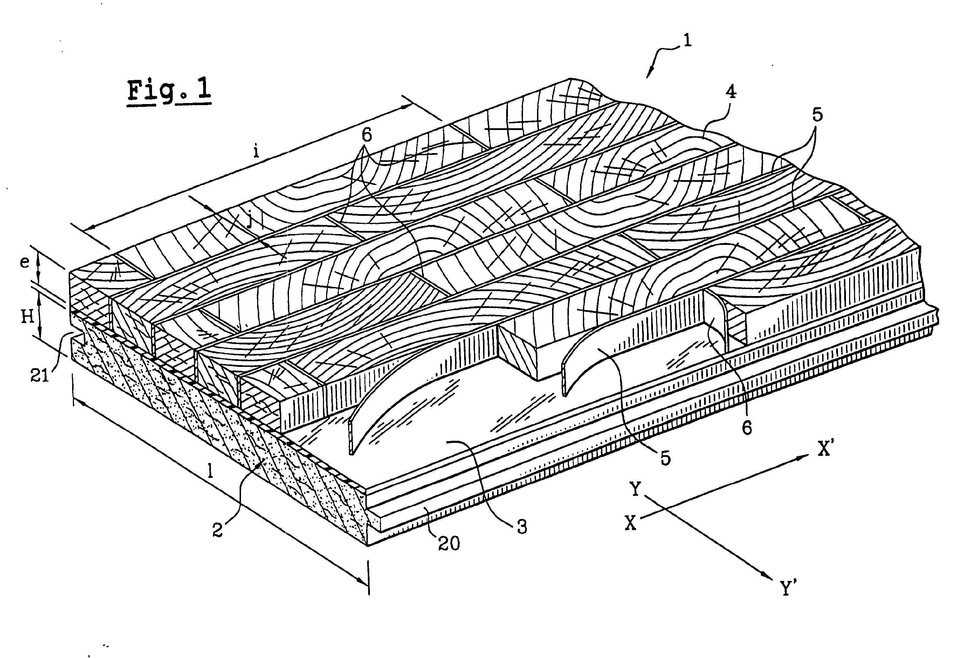

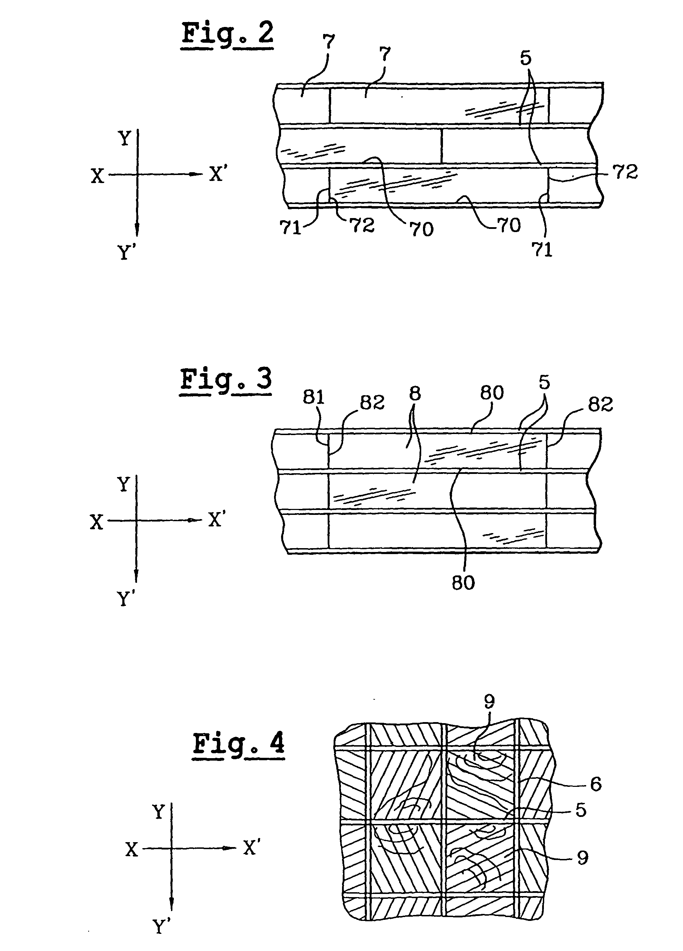

On connaît déjà, par le document WO-84 03 321 un parquet constitué de blocs de bois fixés sur une semelle souple et élastique par collage. Cependant, il existe un interstice entre les blocs, et ces derniers sont mobiles individuellement en direction verticale, causant un effet de "pianotage" (voir figure 2) qui est indésirable dans de nombreuses applications, en particulier pour un usage sportif.

Par ailleurs, le document CH-255 650 décrit un élément de parquet comprenant une latte de base qui présente des profils d'emboîtement à rainure et languette et qui est revêtue d'un parement en bois composé d'un ensemble de plaquettes rectangulaires juxtaposées, collées sur la face supérieure de la latte de base, lesdites plaquettes étant adjacentes à la fois suivant la direction longitudinale et suivant la direction transversale de la latte, mais étant séparées les unes des autres, dans au moins l'une de ces directions, par un joint souple et élastique. Ce joint peut être constitué d'une masse coulée entre les plaquettes ou d'une bande de matière insérée entre les plaquettes.

Les documents WO-80 01 089 et US-3 365 850 ont pour objet des revêtements constitués d'éléments juxtaposés séparés par un matériau mousse, mais qui sont collés directement au sol et non portés par une latte de base, contrairement à l'objet de la présente invention.

La réalisation proposée dans le document CH-255 650, considérée comme élément de l'état de la technique le plus proche de l'invention, présente un inconvénient lié à sa fabrication qui est coûteuse, non adaptée à une production de série.

En effet les différentes plaquettes constitutives du parement doivent être collées individuellement sur la latte de base, ce qui est long et fastidieux, et la mise en place subséquente des joints - que ce soit par coulage d'une matière fluide ou par insertion de bandes - est une opération délicate, également longue et fastidieuse.

La présente invention vise à résoudre ces difficultés en proposant un élément de parquet du genre exposé ci-dessus, qui se prête à une production de grande série, à cadence élevée, sa fabrication pouvant en outre être facilement automatisée.

L'élément de parquet qui fait l'objet de l'invention, tout comme celui du CH-255 650, comprend une latte revêtue d'un parement en bois, et dont la latte de base présente des profils d'emboîtement latéraux à rainure et languette, tandis que le parement est composé d'un ensemble de plaquettes rectangulaires ou carrées juxtaposées, collées sur la face supérieure de la latte, lesdites plaquettes étant adjacentes à la fois suivant la direction longitudinale et suivant la direction transversale de la latte, mais étant séparées les unes des autres, dans au moins l'une de ces directions par un joint souple et élastique susceptible d'absorber les variations dimensionnelles du parement.

Cet élément de parquet est remarquable en ce que, conformément à l'invention, d'une part, ledit joint souple et élastique est une membrane mince en matière élastomère et, d'autre part, a été réalisé en découpant longitudinalement, selon un plan de coupe vertical, une planche à structure multicouche, obtenue par empilage les unes sur les autres d'un ensemble de planchettes et intercalation entre deux planchettes superposées d'une membrane adhésive mince en matière élastomère, avec décalage des planchettes superposées voisines suivant la direction longitudinale de manière à former des joints décalés, après quoi le parement a été collé en bloc sur la latte.

Ainsi, le parement peut être fabriqué de manière simple et rapide, éventuellement au moyen d'une installation automatisée, constituant un sous-ensemble unitaire (d'un seul tenant) apte à être collé "en bloc" sur la latte de base, dans des conditions de rapidité et de fiabilité optimales, ceci avec une homogénéité parfaite des différents joints que constituent les membranes minces en matière élastomère qui ont été intercalées et collées entre les planchettes pour former la planche multicouche intermédiaire.

Par ailleurs, selon un certain nombre de caractéristiques avantageuses, mais non limitatives de l'invention :
- lesdites plaquettes sont des tranches de bois "de bout" ;
- lesdites plaquettes sont séparées par une membrane en matière élastomère uniquement le long de leurs chants latéraux ;
- lesdites plaquettes sont séparées par une membrane en matière élastomère à la fois le long de leurs chants latéraux et le long de leurs chants transversaux ;
- ladite latte de base est en bois latté, en contre-plaqué ou un panneau de particules ;
- le parement est collé sur la latte de base au moyen d'un film de colle qui constitue une couche horizontalement élastique ;

L'invention concerne également un procédé de fabrication d'un élément de parquet tel que celui décrit ci-dessus.

Il comprend les étapes successives suivantes :
a) on réalise ledit parement en opérant comme suit :
   - on empile les unes sur les autres un ensemble de planchettes en intercalant entre deux planchettes superposées une membrane adhésive mince en matière élastomère, avec décalage des planchettes superposées voisines suivant la direction longitudinale de manière à former des joints décalés, de telle sorte qu'on obtient une planche à structure multicouche ;
   - on découpe cette planche longitudinalement, suivant des plans de coupe parallèles entre eux et équidistants, perpendiculaires aux grandes faces desdites planchettes, de manière à obtenir une série de parements dont la largeur correspond (au profil d'emboîtement près) à celle de la latte de base à laquelle elle est destinée ;
b) on colle le parement sur une latte de base au moyen d'une couche de colle légèrement élastique;
c) on ponce et on vernit le parement ;
d) on taille les chants de l'élément de manière à calibrer les chants du parement, tout en fraisant dans les bords de la latte, d'un côté une languette, et de l'autre une rainure ;
e) on applique sur le parement une couche de vernis supplémentaire.

Ce procédé est particulièrement simple à mettre en oeuvre, et peu coûteux.

D'autres caractéristiques et avantages de l'invention apparaîtront de la description et des dessins annexés qui en représente, à simple titre d'exemple non limitatif, des modes de réalisation possible.

Sur ces dessins :
- la figure 1 est une vue partielle d'un élément de parquet conforme à l'invention, coupée par un plan transversal, cette vue comprenant des parties arrachées, destinées à mieux illustrer la structure de l'élément ;
- les figures 2, 3 et 4 sont des vues de dessus schématiques de plusieurs variantes du parement constitutif d'un élément conforme à l'invention ;
- Les figures 5 et 6 sont des schémas illustrant la première étape du procédé, à savoir la réalisation du parement.

Sur l'élément de parquet représenté sur la figure 1, les références 1 et 2 désignent respectivement le parement et la latte de base constitutive de l'élément de parquet.

La latte de base est en bois contre-plaqué ou latté du type couramment utilisé dans la confection d'un parquet.

Ses directions longitudinale et transversale sont respectivement désignées **XX'** et **YY'**.

A titre indicatif, la latte 2 a une longueur de l'ordre de 2,40 m, une largeur **l** (hors languette) de l'ordre de 152 mm et une épaisseur **H** de l'ordre de 8 à 20 mm. Avec la languette 20, sa largeur est de l'ordre de 160 mm.

Les chants latéraux de la latte 2 comportent des profils d'emboîtement à languette 20 et rainure 21, de type connu, permettant un assemblage par emboîtement, éventuellement consolidé par collage, d'une languette dans une rainure de deux éléments de parquet adjacents, lors de la pose du parquet.

Le parement 1 est composé d'une pluralité de plaquettes en bois rectangulaires 4, par exemple en hêtre ou en chêne.

A titre indicatif, chaque plaquette a une épaisseur e de l'ordre de 8 à 12 mm, une longueur **i** de l'ordre de 150 mm et une largeur **j** de l'ordre de 21 mm.

Dans l'exemple illustré, le grand côté de ces plaquettes s'étend selon la direction longitudinale **XX'** de la latte 2.

Il est prévu sept rangées de plaquettes juxtaposées, les plaquettes de deux rangées adjacentes étant décalées d'une demi-longueur, selon une disposition en quinconce.

Ces plaquettes 4 sont collées par leur face inférieure sur le dessus de la latte 2, au moyen d'une membrane de colle 3.

Il s'agit d'une membrane élastique, de faible épaisseur.

Dans l'exemple illustré sur la figure 1, les plaquettes 4 sont des tranches de bois dit "de bout", ce qui signifie que le plan de coupe du bois est perpendiculaire à l'axe du tronc d'arbre dont le bois est issu.

Ce plan de coupe correspond aux grandes faces des plaquettes 4, et par conséquent au plan du parement 1.

Des tranches de bois "de bout" ont pour intérêt d'être extrêmement résistantes aux agressions mécaniques auxquelles leur surface est soumise, et très résistantes à l'usure.

En revanche, elles présentent l'inconvénient d'une variation dimensionnelle multi-directionnelle, due notamment aux variations de température et de degré hygrométrique, alors qu'un bois coupé dans le sens traditionnel - ou "à plat" - travaille plus particulièrement en direction transversale.

Selon une caractéristique essentielle de l'invention, les différentes plaquettes sont séparées les unes des autres avec interposition d'un joint mince en matière élastomère, qui est destiné à servir de joint de dilatation, en absorbant les variations dimensionnelles du parement (dans son propre plan).

Dans l'exemple illustré, du fait qu'il s'agit de tranches de bois "de bout" qui travaillent à la fois transversalement (selon **YY'**) et longitudinalement (selon **XX'**), ces joints sont prévus à la fois entre deux rangées de plaquettes - référence 5 - et entre deux plaquettes d'une même rangée - référence 6 -.

Chaque joint 5, 6 est une membrane mince en matière élastomère, dont la largeur correspond à l'épaisseur e des plaquettes, ces joints étant disposés verticalement comme on le voit sur la figure 1.

Il s'agit d'un ruban en matière élastomère souple et élastique par exemple à adhésif double face, qui assure le collage mutuel des plaquettes 4 entre elles lors de la fabrication de l'élément.

A titre indicatif, le joint 5, 6 a une épaisseur comprise entre 0,5 et 1 mm.

La face supérieure du parement 1 ainsi réalisé est avantageusement poncée puis vernie ou huilée en usine, lors de la fabrication de l'élément.

La figure 2 montre une variante du parement, qui est composé de plaquettes coupées dans le sens traditionnel, "à plat".

Ces plaquettes, référencées 7, subissent des variations dimensionnelles uniquement en direction transversale, ce qui rend inutile la présence de joints transversaux.

Il est donc uniquement prévu entre les rangées de plaquettes 7 des joints élastomère longitudinaux 5 ; les chants d'extrémité 71, 72 de deux plaquettes d'une même rangée sont directement en contact mutuel.

La figure 3 illustre un parement similaire à celui de la figure 2, constitué de plaquettes - référencées 8 - qui sont séparées par des joints longitudinaux 80 seulement, leurs chants d'extrémité 81, 82 étant directement appliqués l'un contre l'autre.

Ce parement se distingue de celui de la figure 2 par le fait que les plaquettes ne sont pas disposées en quinconce, mais en ligne.

Le parement de la figure 4 est composé de plaquettes 9 de forme carrée.

Celles-ci sont coupées "de bout" (comme les plaquettes du mode de réalisation de la figure 1) et sont séparées à la fois par des joints transversaux 6 et longitudinaux 5.

Sur la figure 4 on a représenté une disposition non décalée des plaquettes 9 ; il va de soi qu'elles pourraient également être disposées en quinconce.

Ces différentes variantes sont simplement destinées à illustrer la grande variété des configurations de parement possibles, étant bien entendu qu'un panachage des différents modes de réalisation illustrés est possible, aussi bien concernant le plan de découpe du bois - "de bout" ou "à plat" - que la forme des plaquettes (rectangulaires ou carrées) et leur disposition (en ligne ou en quinconce).

En cas de pose en quinconce, il va de soit qu'un décalage différent d'une demi-longueur peut être envisagé.

Par ailleurs les dimensions relatives des plaquettes de la latte sont très variables.

Un élément de parquet tel que celui qui vient d'être décrit est facile à fabriquer et à poser.

Son parement est d'un aspect esthétique agréable.

Le parquet ainsi réalisé peut subir des charges importantes et possède une certaine élasticité, due à la présence de la couche de colle 3 et à celle des joints 5,6, ce qui la rend particulièrement adaptée pour un usage comme sol sportif et très polyvalent.

A cet égard on notera que le parquet peut avantageusement être posé sur une sous-couche résiliente.

De plus, dans le cas où le parement est constitué de plaquettes tranchées "de bout" le parquet résiste remarquablement aux agressions mécaniques, et à l'usure.

Enfin, comme déjà dit, un tel parquet ne subit pas de déformations intempestives dues aux variations climatiques, grâce à la présence des différents joints 5, 6.

Les plaquettes constitutives du parement pourraient être découpées dans des chutes de bois (bois de récupération).

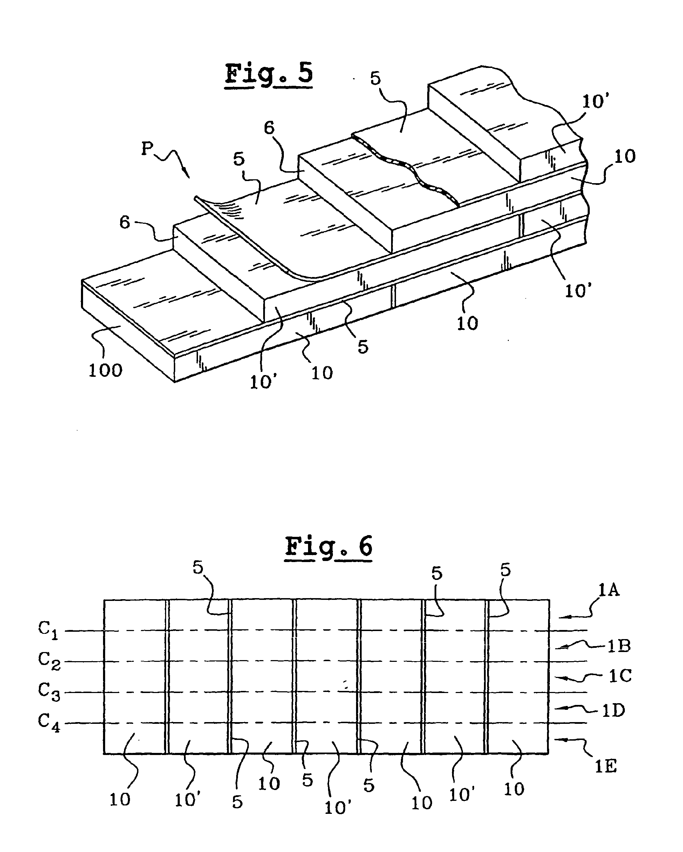

Cependant, en référence aux figures 5 et 6, un mode de fabrication particulièrement intéressant du parement va être maintenant décrit.

On place bout à bout un ensemble de planchettes de bois rectangulaires 10. A titre indicatif, ces planchettes ont une longueur de 150 mm, une largeur de 50 mm et une épaisseur de 21mm. Dans un mode de réalisation possible, on colle bout à bout, par exemple par enduction d'une couche de colle 6, les planchettes d'une même couche. Le nombre de planchettes est tel que la couche ainsi réalisée, ou lamelle, a une longueur totale de l'ordre de 2,40 m par exemple.

Sur la couche ainsi formée, on colle un ensemble similaire de planchettes 10', au moyen d'une membrane adhésive 5. Il s'agit par exemple d'une mousse de polyéthylène d'épaisseur de l'ordre de 0,8 mm et de masse volumique de l'ordre de 67 kg/m³.

D'une couche à l'autre, on procède à un décalage longitudinal des joints entre les planchettes. Dans l'exemple illustré il s'agit d'un décalage d'une demi-longueur du type "joint de pierre". Il va de soit que tout autre type de décalage est possible, par exemple d'un tiers de longueur.

L'empilage et le collage de ses couches superposées aboutissent à une planche **P** ayant une structure en sandwich. Pour obtenir un parement tel que celui représenté à la figure 1, on superpose sept couches de planchettes. Cette planche a une largeur de 50 mm et une épaisseur d'environ 152 mm.

L'étape suivante consiste à découper la planche **P** longitudinalement.

La figure 6 montre la section de la planche, formée d'un ensemble de sept couches 10 -10' séparées par les joints d'élastomère 5.

La découpe est avantageusement réalisée au moyen d'une scie à cadre, dont les lames de coupe, au nombre de quatre en l'occurrence, sont animées d'un mouvement alternatif.

Ce genre de dispositif est couramment utilisé en menuiserie.

La coupe se fait perpendiculairement aux couches, selon des plans qui sont symbolisées sur la figure 6 par des lignes en traits mixtes **C₁** à **C₄.**

Ainsi on obtient une série de cinq parements **1A** à **1E** dont la largeur est d'environ 152 mm et l'épaisseur d'environ 9 mm, par suite de la perte de matière résultant du sciage.

On ponce et on vernit le parement.

Chacun des parements est ensuite collé sur une latte de base brute, de largeur adéquate (160 mm environ) ; Les chants de l'élément sont alors taillés, d'une part pour calibrer les bords latéraux du parement, d'autre part pour former la languette et la rainure dans les chants de la latte. A titre indicatif, la réalisation de la taille de la languette et de la rainure ramène la largeur de la partie supérieure de la latte à une valeur de 152 mm environ (au lieu des 160 mm initiaux).

On procède enfin à un vernissage de finition du parement.

## Revendications

1. Elément de parquet comprenant une latte de base (2) revêtue d'un parement en bois (1), et dont la latte (2) présente des profils d'emboîtement latéraux à rainure (21) et languette (20), tandis que le parement (1) est composé d'un ensemble de plaquettes rectangulaires (4 ; 7 ; 8) ou carrées (9) juxtaposées, collées sur la face supérieure de la latte (2), lesdites plaquettes (4 ; 7 ; 8 ; 9) étant adjacentes à la fois suivant la direction longitudinale (XX') et suivant la direction transversale (YY') de la latte, mais étant séparées les unes des autres, dans au moins l'une de ces directions par un joint souple et élastique susceptible d'absorber les variations dimensionnelles du parement (1) **caractérisé par le fait que** ledit joint souple et élastique est une membrane mince en matière élastomère et que ledit parement (1) a été réalisé en découpant longitudinalement, selon un plan de coupe vertical, une planche (P) à structure multicouche, obtenue par empilage les unes sur les autres d'un ensemble de planchettes (10) et intercalation entre deux planchettes superposées d'une membrane adhésive mince en matière élastomère (5), avec décalage des planchettes superposées voisines (10, 10') suivant la direction longitudinale de manière à former des joints décalés, après quoi le parement a été collé en bloc sur la latte (2).

2. Elément de parquet selon la revendication 1, **caractérisé par le fait que** lesdites plaquettes (4) sont des tranches de bois "de bout".

3. Elément de parquet selon l'une des revendications 1 ou 2, **caractérisé par le fait que** lesdites plaquettes (7 ; 8) sont séparées par une membrane en matière élastomère (5) uniquement le long de leurs chants latéraux (70 ; 80).

4. Elément de parquet selon l'une des revendications 1 ou 2, **caractérisé par le fait que** lesdites plaquettes (4 ; 9) sont séparées par une membrane en matière élastomère (5 ; 6) à la fois le long de leurs chants latéraux et le long de leurs chants transversaux.

5. Elément de parquet selon l'une des revendications 1 à 4, **caractérisé par le fait que** ladite latte de base (2) est en bois latté, en contre-plaqué, ou un panneau de particules.

6. Elément de parquet selon l'une des revendications 1 à 5, **caractérisé par le fait que** le parement (1) est collé sur la latte de base (2) au moyen d'un film de colle (3) qui constitue une couche horizontalement élastique.

7. Procédé de fabrication d'un élément de parquet conforme à l'une des revendications 1 à 6, qui comprend les étapes successives suivantes :
a) on réalise ledit parement (1) en opérant comme suit :
- on empile les unes sur les autres un ensemble de planchettes (10) en intercalant entre deux planchettes superposées une membrane adhésive mince en matière élastomère (5), avec décalage des planchettes superposées voisines (10, 10') suivant la direction longitudinale de manière à former des joints décalés, de telle sorte qu'on obtient une planche **(P)** à structure multicouche ;
- on découpe cette planche longitudinalement, suivant des plans de coupe **(C1, C2, C3, C4)** parallèles entre eux et équidistants, perpendiculaires aux grandes faces desdites planchettes (10), de manière à obtenir une série de parements **(1A, 1B, 1C, 1D, 1E)** dont la largeur correspond, au profil d'assemblage près, à celle de la latte de base (2) à laquelle elle est destinée ;
b) on colle le parement (1) sur une latte de base (2) au moyen d'une couche de colle légèrement souple ;
c) on ponce et on vernit le parement (1) ;
d) on taille les chants de l'élément (1-2) de manière à supprimer les zones latérales du parement qui débordent de la latte de base (2), et à fraiser dans les bords de cette dernière, d'un côté une languette (20), et de l'autre une rainure (21);
e) on procède à un vernissage additionnel, de finition, du parement (1).

## Claims

1. A parquet flooring element comprising a base plank (2) covered in a facing (1) of wood, and in which the plank (2) presents lateral tongue (20) and groove (21) mutual-engagement profiles, while the facing (1) is made up of a set of juxtaposed rectangular or square blocks (4; 7; 8; or 9) stuck onto the top face of the plank (2), said blocks (4; 7; 8; 9) being adjacent both in the longitudinal direction (XX') and in the transverse direction (YY') of the plank, but being separated from one another, in at least one of said directions, by a flexible and elastic gasket suitable for absorbing dimensional variations of the facing (1), the flooring element being **characterized by** the facts that said flexible and elastic gasket is a thin membrane of elastomer material, and that said facing (1) is made by cutting up longitudinally, in a vertical section plane, a board (P) of multilayer structure, obtained by stacking a set of small boards (10) on one another and by interposing a thin adhesive membrane of elastomer material (5) between two superposed small boards, with adjacent superposed small boards (10, 10') being offset in the longitudinal direction so as to form offset joints, after which the facing is bonded as a whole onto the plank (2) by adhesive.

2. A flooring element according to claim 1, **characterized by** the fact that said blocks (4) are "end grain" slices of wood.

3. A flooring element according to claim 1 or claim 2, **characterized by** the fact that said blocks (7; 8) are separated by a membrane of elastomer material (5) solely along their lateral side faces (70; 80).

4. A flooring element according to claim 1 or claim 2, **characterized by** the fact that said blocks (4; 9) are separated by a membrane of elastomer material (5; 6) both along their lateral side faces and along their transverse side faces.

5. A flooring element according to any one of claims 1 to 4, **characterized by** the fact that said base plank (2) is made of blockboard, plywood, or particle board.

6. A flooring element according to any one of claims 1 to 5, **characterized by** the fact that the facing (1) is stuck onto the base plank (2) by means of a film of adhesive (3) that constitutes a horizontally elastic layer.

7. A method of fabricating a flooring element according to any one of claims 1 to 6, the method comprising the following successive steps:
a) making said facing (1) by operating as follows:
· stacking a set of small boards (10) on one another, interposing a thin adhesive membrane of elastomer material (5) between pairs of superposed small blocks, with adjacent superposed small boards (10, 10') being offset in the longitudinal direction so as to form offset joints, in such a manner as to obtain a board (P) of multilayer structure;
· cutting up said board longitudinally along section planes (C1, C2, C3, C4) that are mutually parallel and equidistant, being perpendicular to the large faces of said small boards (10) so as to obtain a series of facings (1A, 1B, 1C, 1D, 1E) of width corresponding, ignoring any assembly profile, to the width of the base plank (2) onto which it is to be fitted;
b) sticking the facing (1) onto the base plank (2) by means of a layer of slightly flexible adhesive;
c) sanding and varnishing the facing (1);
d) cutting the side faces of the element (1-2) so as to eliminate the lateral zones on the facing that extend beyond the base plank (2), and cutting to form at the sides thereof, on one side a tongue (20) and on the other side a groove (21); and
e) performing additional varnishing for finishing purposes on the facing (1).

## Patentansprüche

1. Parkettelement, das eine Basisleiste (2) umfaßt, die mit einer Auflage aus Holz (1) beschichtet ist, und dessen Leiste (2) seitliche Profile zum Ineinanderfügen mit Nut (21) und Feder (20) hat, wobei die Auflage (1) aus einem Satz aneinanderliegender rechteckiger (4; 7; 8) oder quadratischer (9) Plättchen zusammengesetzt ist, die auf die Oberseite der Leiste (2) geklebt sind, wobei die Plättchen (4; 7; 8; 9) gleichzeitig in der Längsrichtung (XX') und in der Querrichtung (YY') der Leiste nebeneinander liegen, jedoch in wenigstens einer dieser Richtungen durch ein weiches und elastisches Fugenelement, das dafür geeignet ist, die Abmessungsveränderungen der Auflage (1) zu absorbieren, voneinander getrennt sind, **dadurch gekennzeichnet, daß** das weiche und elastische Fugenelement eine dünne Membran aus einem Elastomermaterial ist und daß die Auflage (1) hergestellt wird, indem mit einer vertikalen Schnittebene in Längsrichtung ein Brett (P) mit einem Mehrschichtaufbau zerschnitten wird, das durch das Aufeinanderstapeln einer Gruppe von Brettchen (10) und das Einfügen einer dünnen klebenden Membran aus einem Elastomermaterial (5) zwischen zwei aufeinanderliegende Brettchen erhalten wird, mit einem Versatz von benachbarten aufeinanderliegenden Brettchen (10, 10') in der Längsrichtung, derart, daß versetzte Fugen gebildet werden, woraufhin die Auflage zusammenhängend auf die Leiste (2) geklebt wird.

2. Parkettelement nach Anspruch 1, **dadurch gekennzeichnet, daß** die Plättchen (4) "Hirnholz"-Scheiben sind.

3. Parkettelement nach einem der Ansprüche 1 oder 2, **dadurch gekennzeichnet, daß** die Plättchen (7; 8) nur entlang ihrer Seitenkanten (70; 80) durch eine Membran aus einem Elastomermaterial (5) getrennt sind.

4. Parkettelement nach einem der Ansprüche 1 oder 2, **dadurch gekennzeichnet, daß** die Plättchen (4; 9) gleichzeitig entlang ihrer Seitenkanten und entlang ihrer Querkanten durch eine Membran aus einem Elastomermaterial (5; 6) getrennt sind.

5. Parkettelement nach einem der Ansprüche 1 bis 4, **dadurch gekennzeichnet, daß** die Basisleiste (2) aus Stabsperrholz, Sperrholz oder einer Spanplatte besteht.

6. Parkettelement nach einen der Ansprüche 1 bis 5, **dadurch gekennzeichnet, daß** die Auflage (1) mittels eines Klebefilms (3), der eine horizontal elastische Schicht bildet, auf die Basisleiste (2) geklebt ist.

7. Verfahren zur Herstellung eines Parkettelements gemäß einem der Ansprüche 1 bis 6, das die folgenden aufeinanderfolgenden Schritte umfaßt:
a) die Auflage (1) wird hergestellt, indem wie folgt vorgegangen wird:
- eine Gruppe von Brettchen (10) wird aufeinander gestapelt, wobei zwischen zwei aufeinanderliegende Brettchen eine dünne klebende Membran aus einem Elastomermaterial (5) eingefügt wird, mit einem Versatz benachbarter aufeinanderliegender Brettchen (10, 10') entlang der Längsrichtung, derart, daß versetzte Fugen gebildet werden, derart, daß ein Brett (P) mit einem Mehrschichtaufbau erhalten wird;
- dieses Brett wird in Längsrichtung entlang von Schnittebenen (C1, C2, C3, C4) zerschnitten, die zueinander parallel sind, gleiche Abstände haben und senkrecht zu den großen Seiten der Brettchen (10) sind, derart, daß eine Reihe von Auflagen (1A, 1B, 1C, 1D, 1E) erhalten wird, deren Breite bis auf das Profil zum Zusammensetzen derjenigen der Basisleiste (2) entspricht, für die sie vorgesehen sind;
b) die Auflage (1) wird mittels einer leicht weichen Klebeschicht auf eine Basisleiste (2) geklebt;
c) die Auflage (1) wird geschliffen und lackiert;
d) die Kanten des Elements (1-2) werden so zugeschnitten, daß die seitlichen Zonen der Auflage entfernt werden, die über die Basisleiste (2) überstehen, und daß in die Ränder dieser letzteren auf der eine Seite eine Feder (20) und auf der anderen eine Nut (21) eingefräst wird;
e) es wird eine zusätzliche Lackierung der Auflage (1) als Endanstrich vorgenommen.
